**Europäisches Patentamt**

**European Patent Office**

**Office européen des brevets**

(19)

(11) Veröffentlichungsnummer: **0 132 503**
**B1**

(12)

# EUROPÄISCHE PATENTSCHRIFT

(45) Veröffentlichungstag der Patentschrift:
**01.04.87**

(51) Int. Cl.⁴: **B 01 D 53/34**

(21) Anmeldenummer: **84103765.8**

(22) Anmeldetag: **05.04.84**

(54) **Verfahren zum Abscheiden gasförmiger, flüchtiger und/oder flüssiger Verunreinigungen aus Abgasen.**

(30) Priorität: **23.06.83 DE 3322688**

(43) Veröffentlichungstag der Anmeldung:
**13.02.85 Patentblatt 85/7**

(45) Bekanntmachung des Hinweises auf die Patenterteilung:
**01.04.87 Patentblatt 87/14**

(84) Benannte Vertragsstaaten:
**AT BE CH FR GB IT LI LU NL SE**

(56) Entgegenhaltungen:
**DE - A - 2 445 315**
**DE - B - 2 558 256**
**US - A - 3 979 283**

**Die Akte enthält technische Angaben, die nach dem Eingang der Anmeldung eingereicht wurden und die nicht in dieser Patentschrift enthalten sind.**

(73) Patentinhaber: **Gebrüder Weiss K.G.,**
**Kupferwerkstrasse, D-6340 Dillenburg Frohnhausen (DE)**

(72) Erfinder: **Kneer, Franz Xaver, Am Honigbaum 6, D-6345 Eschenburg-Eibelshausen (DE)**

(74) Vertreter: **Puschmann, Heinz H. et al, Sendlinger-Tor-Platz 11, D-8000 München 2 (DE)**

## Beschreibung

Die Erfindung bezieht sich auf ein Verfahren zum kontinuierlichen Abscheiden gasförmiger, flüchtiger und/oder flüssiger Verunreinigungen aus Abgasen von Verarbeitungsanlagen der Industrie gemäss dem Oberbegriff des Patentanspruches 1.

Aus der De-A-2 445 315 ist eine Einrichtung zur Durchführung eines solchen Verfahrens bekannt geworden, die als Absorbens einen durch Verrotten von organischen Abfällen gewonnenen Kompost verwendet, dessen Verrotten noch nicht vollständig abgeschlossen ist.

Solche als sogenannte Bio-Filter bekanntgewordenen Einrichtungen sind bisher zur Filterung der Abluft von Kompostieranlagen für das Kompostieren von teilweise entwässerten Kommunalschlämmen, also zum Abscheiden organischer Verunreinigungen, verwendet worden. Es ist auch bereits vorgeschlagen worden, derartige Bio-Filter zum Abscheiden von Verunreinigungen aus Abgasen zu verwenden, die aus Klär- und Verarbeitungsanlagen der Industrie, insbesondere der chemischen Industrie, stammen. Solche Abgase weisen sowohl organische als auch anorganische gasförmige, flüchtige und/oder flüssige Verunreinigungen in Form von Schwefelwasserstoff, Ammoniak, Ammoniumverbindungen, Thiolen oder aliphatischen, cycloaliphatischen oder aromatischen· Kohlenwasserstoffen, insbesondere von Schwefelwasserstoffen, Ammoniak, Ammoniumverbindungen und Thiolen auf, wie die Analyse von Abgasen aus Kläranlagen der chemischen Industrie, insbesondere der Pharmaindustrie zeigt. Dies gilt auch für Abgase, die bei der Herstellung von Penicillinen und Cephalosporinen und bei der Reinigung von deren Abwässern anfallen.

In langen Versuchsreihen hat es sich nunmehr gezeigt, dass solche Bio-Filter dann zum Abscheiden von solchen Abgasen wenig geeignet sind, wenn diese stark halogeniert sind. Zwar kann mehr oder weniger zufällig bei geeigneter Zusammensetzung der stets als Mischgas vorliegenden Abgase infolge natürlicher Selektion nach Monaten ein für das spezielle Mischgas optimal arbeitender Mikrobenstamm sich ausbilden, der einen messbaren Abbau auch halogenierter Abgas-Anteile bewirkt. Solche rein zufällige Wirkungen der zur Anwendung gelangenden Bio-Masse sind jedoch technisch nicht auswertbar.

Der Erfindung liegt die Aufgabe zugrunde, das bekannte Verfahren derart weiterzubilden, dass ohne unzureichend lange Anlaufphasen für die Mikrobiologie der zur Anwendung gelangenden Bio-Masse dieses in seiner Wirksamkeit hinsichtlich des Abbaus stark halogenierter Kohlenwasserstoffe wesentlich verbessert und damit grosstechnisch handhabbar wird.

Diese Aufgabe ist gemäss der Erfindung durch die kennzeichnenden Merkmale des Patentanspruches 1 gelöst.

Weitere Merkmale der Erfindung ergeben sich aus den Unteransprüchen.

Auch beim erfindungsgemässen Verfahren wird das biologisch hochaktive, zum Beispiel auf Basis von noch nicht vollständig verrottetem Kompost von lockerer krümeliger Struktur mit einer Porosität von 20 bis 50% gewonnene Absorbens als Haufwerk annähernd konstanter Füllhöhe mit einem Wassergehalt von 30 bis 70 Gewichtsprozent und dementsprechend einem Trockensubstanzgehalt von 70 bis 30 Gewichtsprozent, einem Gehalt an organischer Substanz von 30 bis 70 Gewichtsprozent und einem pH-Wert (in Wasser) von 5,5 bis 8 durch einen allseits geschlossenen Behälter geführt, an dessen Sohle die jeweils unterste Schicht des Haufwerks ausgetragen und — gegebenenfalls nach Zumischen von frischem Absorbens — oben auf das Haufwerk wieder aufgelegt, und werden die einen Stoffwechselprozess einleitenden Abgase als sogenannte Atemluft dem Behälter an seiner Sohle über ein Rohrleitungssystem mittels eines Druckgebläses zugeführt und nach Durchströmen des Haufwerkes über eine Öffnung mittels eines Sauggebläses derart abgesaugt, dass ein oberhalb des Haufwerkes entstehendes Vakuum 0,07 bar nicht übersteigt.

Überraschenderweise hat sich gezeigt, dass auch die stark mit halogenierten Verunreinigungen belasteten Mischgase aus Industrie-Kläranlagen beim Durchströmen des als Absorbens dienenden, erfindungsgemäss geimpften Haufwerkes annähernd vollständig beseitigt werden. Beim Durchströmen des Haufwerkes werden die dort vorhandenen Bakterien und Mikroben angeregt, intensiv tätig zu werden. Hierbei werden unter Verringerung der Substratmenge, also des Haufwerkes, im wesentlichen durch Stoffwechselvorgänge auch diese halogenierten Mischgase umgesetzt und abgebaut.

Bei zu grosser Belastung der Abgase durch halogenierte Verunreinigungen werden vorzugsweise die erforderlichen Stoffwechselprozesse durch das Zudosieren von leicht abbaubaren Substanzen aufrechterhalten, wobei das Zudosieren derart zu bemessen ist, dass das aus dem Absorbens austretende gereinigte Abgas weniger als 150 Milligramm organisches C pro $m^3$ enthält.

Die bei Verwendung üblicher Absorbentien, wie Schwelkokse aus Torf- oder Braun-, Stein- oder Holzkohle, nur teilweise Bindung der Mischgase und das schnelle Zusetzen ihrer porösen Oberflächen durch die in den Abgasen befindlichen Schwebstäube entfällt nunmehr völlig. Dies gilt insbesondere für mit Stäuben behaftete Abgase.

Ein weiterer Vorteil ist darin zu sehen, dass das aus dem Behälter ausgetragene Absorbens als Kompost weiterverwendet werden kann. Durch die Verwendung von Druck- und Sauggebläsen kann nicht nur die Strömungsgeschwindigkeit der Abgase durch den Behälter, sondern auch deren Partialdruck im Haufwerk geregelt werden. Um einen ungestörten Abbau der Verunreinigungen zu gewährleisten, muss trotz eines gewünschten hohen Durchsatzes der Gasdruck klein bleiben, da die am Abbau beteiligten Mikroben bei hohen Gasdrücken ihre Aktivität einstellen. Über geeignete Regler lassen sich durch Änderung der Förderleistung sowohl von Ein- und Austragsvorrichtung als auch von Druck- und Sauggebläsen die biologischen Ab- und Umbauprozesse den jeweilig anfallenden Abluftmengen sowie ihrer Verunreinigungen anpassen, so dass die innerhalb des Absorbens angesiedelten Mikroorganismen ihre optimalen Lebensbedingungen und somit ihre volle Wirkungsfähigkeit behalten.

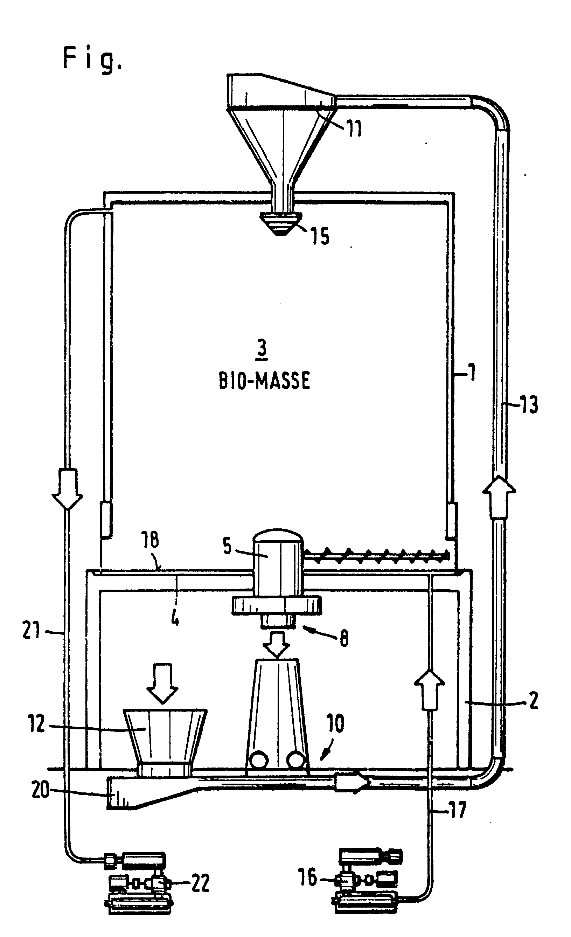

Die Erfindung ist anhand einer in der Zeichnung mehr oder minder schematisch dargestellten Filtereinrichtung beschrieben.

Die Figur zeigt ein Fliessschema der ein sogenannten Bio-Filter bildenden Filtereinrichtung gemäss der Erfindung.

In einem Behälter 1, der als zylindrisches, mit einer Isolierschicht versehenes Metallgehäuse ausgebildet ist und auf einem Sockel 2 steht — vgl. das Fliessschema — befindet sich eine biologisch hochaktive Bio-Masse in Form eines Haufwerkes 3 als Absorbens. Die Bio-Masse besteht z.B. aus einem durch über die Luftzufuhr gesteuertes Verrotten von organischen Abfällen, zum Beispiel von mit einem Kohlenstoffträger versetzten organischen Klärschlamm oder auch aus Müll gewonnenen, noch nicht vollständig verrotteten Kompost. Nach den Verfahrensmerkmalen der DE-B-2 541 070 ist durch Steuerung dieses Verfahrens die dabei gewonnene Bio-Masse so beschaffen, dass hohe biologische Aktivität der Mikroorganismen vorliegt.

Diese Bio-Masse wird vor dem Einfüllen in das Metallgehäuse beimpft, und zwar pro Kubikmeter Bio-Masse mit einem Pilz der Species Penicillium (weiss) in einer Menge von 10 Liter eines Penicillium-Konzentrates einer Konzentration von $10^6$ bis $10^7$ Sporen pro Millimeter.

Der Behälter 1 weist eine Bodenfläche 4 auf, über die sich eine einen gleichmässigen Austrag ermöglichende Austragsfräse 5 bewegen kann. Die Austragsfräse wird von einem nicht dargestellten Antrieb angetrieben, der um eine Achse beweglich ist, so dass die Austragsfräse sich zusätzlich zu ihrer eigenen Bewegung um ihre in der Zeichenebene liegende Längsachse im Uhrzeigersinne langsam über den Behälterboden bewegen kann. Die Austragsfräse 5 trägt dabei jeweils die unterste Schicht des Haufwerks 3 über eine Öffnung 8 am Mittelpunkt der Sohle des Behälters aus. Das ausgebrachte Material fällt auf eine Fördervorrichtung 10, die es in Pfeilrichtung zu einer Mischstelle 11 bringt, der eine Zubringvorrichtung 12 für Frischmaterial und eine Steilfördervorrichtung 13 zugeordnet sind. Hierdurch wird die ausgebrachte Bio-Masse gegebenenfalls mit frischer Bio-Masse durchsetzt und von oben her dem Behälter 1 wieder zugeführt. Hier wird sie über einen Rundverteiler 15 gleichmässig in der Behälteröffnung verteilt. Anfänglich ist selbstverständlich frische Bio-Masse allein zu verwenden.

Über ein schematisch dargestelltes Gebläse 16 und ein Rohrleitungssystem 17 werden die zu reinigenden Abgase oder die zu reinigende Abluft in den unteren Bereich des Behälters, also an seiner Sohle, eingeleitet. Hierzu dient ein Düsensystem 18. Der Behälter 1 ist oben geschlossen. Über eine schematisch dargestellte Abluftleitung 21 und ein ebenfalls schematisch dargestelltes Sauggebläse 22 wird die durch das Haufwerk strömende Abluft abgesaugt. Über eine an sich bekannte, hier nicht dargestellte Regeleinrichtung wird die Strömungsgeschwindigkeit der Abluft durch das Haufwerk eingestellt. Hierbei ist zu beachten, das trotz eines grossen Durchsatzes an zu reinigenden Abgasen der Gasdruck im Behälter klein bleibt; im Idealfalle sollte das Abgas lediglich durch das Haufwerk diffundieren. Als technisch realisierbare Werte haben sich ein Vakuum oberhalb des Haufwerkes von maximal 0,07 bar bei Gasgeschwindigkeiten von 2 bis 15, vorzugsweise 2 bis 10 m/min erwiesen, so dass sich Verweilzeiten der Abgase im Haufwerk von mindestens 50 sec ergeben. Ein höheres Vakuum kann zum gefahrvollen sogenannten Implodieren des Behälters führen.

Die tatsächliche Verweilzeit der Abluft im Haufwerk ergibt sich aus

$$ta = \frac{A \times h \times P \times 3.600}{\dot{V} \times 100} = (sec) \quad (1)$$

wobei  $A$ = Anströmfläche $(m^2)$
$h$ = Füllhöhe (m)
$P$ = Porosität (%)
$\dot{V}$ = eingeblasene Luftmenge pro Stunde $(m^3/h)$
ist.

Da die von der jeweiligen Korngrösse des verwendeten Kompostmaterials abhängige Porosität erfahrungsgemäss zwischen 20 und 50% schwankt, sollte als mittlerer Wert der Porosität ca. 40% angenommen werden, der dann erfahrungsgemäss durch das Gewicht der Materialsäule im Behälter auf ca. 30% sinkt.

Die einzuregelnde Luftgeschwindigkeit $V_1$ ergibt sich aus

$$V_1 = \frac{\dot{V} \times 100}{A \times P \times 60} = / (m/min) \quad (2)$$

wobei  $\dot{V}$ = eingeblasene Luftmenge $(m^3/h)$
$A$ = Anströmfläche $(m^2)$
$P$ = Porosität
ist.

Die von unten her in Pfeilrichtung zugeleiteten, über die Querschnittsfläche gleichmässig verteilten Abgase müssen das den Behälter von oben nach unten durchwandernde Haufwerk, also das ein Filterbett bildende Absorbens, durchströmen. Hierbei erfolgt die Reinigung der Abgase durch Absorption und biologische Umsetzung mit dem Absorbens. Diese Absorption und biologische Umsetzung sind biologische Vorgänge, so dass hierbei ein weiterer Rotteprozess im Haufwerk entsteht, der zu einem Rotteverlust führt. Dieser Rotteverlust bzw. Rotteschwund wird durch beimpfte Frischmaterialzugabe über die Einbringvorrichtung 12 ständig ersetzt, so dass der Behälter 1 stets vollständig mit Absorbens gefüllt ist, also stets gleiche Füllhöhe aufweist. Je nach dem Volumen und der Stärke der Abgasverunreinigung wird der Behälter im Um- und/oder Zulauf langsam oder schneller gefahren, also der Durchsatz an Absorbens verlangsamt beschleunigt. Da die Abgase immer von unten nach oben strömen, wird die unterste Filterschicht immer am stärksten belastet. Hier erfolgt das Austragen des Absorbens, das nach Zusatz von beimpftem Frischmaterial oben wieder zugeführt wird. Ebenfalls werden hierbei die gegebenenfalls durch staubbehaftete Abgase verdichteten unteren Schichten des Haufwerkes umgewälzt, so dass ein Zusetzen des Absorbens, wie es bei bekannten Filtern der Fall ist, hier nicht stattfinden kann. Selbstverständlich muss nach einer bestimmten Zeit das Absorbens vollständig durch neue beimpfte Bio-Masse ersetzt werden.

Der Behälter 1 kann ein Volumen von etwa 10 bis 200 m³ umfassen. Seine Füllhöhe, also die Höhe des Filterbettes, ist allein von der unteren zulässigen Grenze der Porosität und vom Gewicht des Haufwerkes abhängig. Im vorliegenden Ausführungsbeispiel beträgt zum Beispiel die Füllhöhe ca. 6 m. bei einem Haufwerk-Volumen von 100 m³ beträgt dabei die Anströmfläche ca. 15,9 m³. Allgemein gilt, dass das Volumen entsprechend der anfallenden Gasmenge und der Art und Grösse der Verunreinigungen zu wählen ist. Dies gilt ebenfalls für den Umfang des Austrages und die Zuführung von frischer beimpfter Bio-Masse, die gleichfalls von der das Bio-Filter durchsetzenden Gasmenge und der Art und Grösse der Verunreinigung abhängen. Grundsätzlich ist es möglich, keine, wenig oder viel frische beimpfte Bio-Masse zuzumischen. Über hier nicht dargestellte Messsonden kann die Wirksamkeit der Filtereinrichtung festgestellt und dementsprechend der Filterprozess durch Änderung des Durchsatzes an Absorbens und Zumischung von frischer beimpfter Bio-Masse gesteuert werden. Über die bereits erwähnte Fördervorrichtung 10 kann auch verbrauchte Bio-Masse bei 20 ausgebracht werden.

Da viele Abgase der hier infrage stehenden Art 100% wassergesättigt sind, ist das der beschriebenen Filtereinrichtung zuzuführende Abgas vor der Einspeisung in den Bio-Filter über einen Wasserabscheider zu führen.

*Beispiel*

Messungen der Abgase aus einer sogenannten Turmbiologie einer Industrie-Kläranlage nach einer Anlaufphase des Bio-Filters von ca. 10 Tagen.

I.
*Material und Besatz an Mikroorganismen des als Absorbens verwendeten, dem Behälter 1 nach 14 Tagen entnommenen Haufwerkes in Form von Proben*

| | | |
|---|---|---|
| Volumen des aus unvollständig verrottetem Klärschlamm-Kompost bestehenden Haufwerkes des Bio-Filters | = | 100 m³ |
| Höhe | = | 6,3 m |
| Wassergehalt | = | 63,73% |
| organische Substanz (T.S.) | = | 69,2% |
| pH-Wert (in Wasser) | = | 6,63 |

Dem Behälter wurden an unterschiedlichen Stellen Proben entnommen; folgende Mikroorganismen konnten sicher identifiziert werden:

| | |
|---|---|
| *Bakterien:* | Actinomyces globisporus |
| | Micrococcus albus |
| | Micromonospora vulgaris |
| | Proteus vulgaris |
| *Pilze:* | Penicillium species (weiss) |
| | Cephalosporium species |
| | Mucor species |
| | Circinella umbellata |
| | Cephalothecium species |
| | Ovularia species |
| | Stemphylium piriforme |
| *Kleintiere:* | Erdmilben |
| | Nematoden ( = Saprophyten) |

Die Besiedlungsdichte an Penicillium (weiss) und Actinomyces globisporus war jeweils stark verbreitet. Der Geruch der Proben entsprach einem typischen Kompostgeruch. Hieraus ist eine starke Abnahme der zugeführten Menge an chlorierten Kohlenwasserstoffen zu entnehmen.

II.
*Versuchsergebnisse*

| | | |
|---|---|---|
| Lage der Messstelle | = | im Abgaskamin des Bio-Reaktors |
| Durchmesser der Messstelle | = | 190 mm |
| Messquerschnitt | = | 0,0284 m² |
| Anzahl der Messachsen | = | 2 |
| Anzahl der Messpunkte je Messachse | = | 1 |

Die Messtelle entsprach den Massangaben der Richtlinie VDI 2066.

Nach einer Beschickungsdauer von 14 Tagen mit einem zu reinigenden Abgas von Verarbeitungsanlagen der chemischen Industrie (Farbenfabriken Bayer, Werk Dormagen), das pro m² durchschnittlich enthielt etwa 21 mg Chlormethan, 69,5 mg Dichlormethan, 250 mg Dichlorethan, 47 mg Xylole, 32,5 mg Ethylbenzol, 5,5 mg Chlorbenzol und 70,5 mg Chlortoluole, etwa 300 mg nicht näher analysierte Verunreinigungen, wobei der verbleibende überwiegende Anteil des Abgases aus den üblichen Bestandteilen der atmosphärischen Luft und sonstigen, nicht zu den störenden Verunreinigungen zählenden Substanzen, wie Wasserdampf, bestand, wurden jeweils an zwei verschiedenen Messstellen die Mengen an sowohl im zu reinigenden Abgas als auch im gereinigten Abgas enthaltenen Verunreinigungen gaschromatographisch gemessen. Die dabei erhaltenen Ergebnisse sind folgender Tabelle zu entnehmen.

TABELLE

| Art der Verun-reinigung | Menge im verunreinigten Abgas (mg/m$^3$) Eingang | | Menge im gereinigten Abgas (mg/m$^3$) Ausgang | |
|---|---|---|---|---|
| | Messst. 1 | Messst. 2 | Messst. 1 | Messst. 2 |
| Chlormethan | 21 | 21 | <3 | <3 |
| Dichlormethan | 69 | 70 | 20 | 20 |
| Dichlorethan | 250 | 250 | 130 | 120 |
| Xylole | 46 | 48 | 10 | 10 |
| Ethylbenzol | 32 | 33 | 2 | 2 |
| Chlorbenzol | 5 | 6 | <2 | <2 |
| Chlortoluole | 68 | 73 | 16 | 15 |

Es ist ersichtlich, dass das erfindungsgemässe Verfahren überraschenderweise zu einer hocheffizienten Reinigung von Abgasen befähigt ist, die eine hohe Belastung an halogenierten Verunreinigungen aufweisen.

Die gereinigte Abluft ist nicht umweltbelastend, was durch Schnüffelproben festgestellt werden konnte, woraus zu schliessen ist, dass auch die nicht näher analysierten Verunreinigungen stark abgebaut werden.

**Patentansprüche**

1. Verfahren zum kontinuierlichen Abscheiden gasförmiger, flüchtiger und/oder flüssiger Verunreinigungen aus Abgasen von Verarbeitungsanlagen der chemischen Industrie unter Benutzung eines von einem Behälter umschlossenen, als Substrat für aerobe Stoffwechselprozesse durchführende Mikroorganismen dienenden Absorbens, durch das die Abgase von unten nach oben zwangsweise geführt werden, wobei über eine Fördereinrichtung das mittels mechanischer Ein- und Austragsmittel dem Behälter oben zugeführte und an seiner Sohle abgeführte Absorbens gegebenenfalls nach Zumischung von frischem Absorbens dem Behälter von oben wieder zugeführt wird, gekennzeichnet durch folgende Merkmale:

a) Abgase mit einer Belastung an halogenierten Verunreinigungen in Form von aliphatischen, cycloaliphatischen und/oder aromatischen Kohlenwasserstoffen werden atmosphärischer Luft zudosiert bis die im Abgas enthaltenen Verunreinigungen über 25 Gewichtsprozent betragen.

b) der als Absorbens verwendeten, stark mit Actinomycetes globisporus besetzten Bio-Masse wird zwecks zusätzlichen Pilzbesatzes die Species Penicillium pro m$^2$ Absorbens 5 bis 15, vorzugsweise 9 bis 11 l Penicillium-Konzentrat einer Konzentration von 10$^6$ bis 10$^7$ Sporen pro Milliliter zugegeben, und

c) der O$_2$-Gehalt der dem Absorbens zugeführten Abgase wird auf mindestens 10 Volumenprozent gehalten.

2. Verfahren nach Anspruch 1, dadurch gekennzeichnet, dass dem Abgas vor dem Eintritt in das Absorbens leicht abbaubare, gasförmige, flüchtige und/oder flüssige Substanzen derart zudosiert werden, dass das aus dem Absorbens austretende gereinigte Abgas weniger als 150 Milligramm organisches C pro m$^3$ Abgas enthält.

3. Verfahren nach Anspruch 2, dadurch gekennzeichnet, dass als leicht abbaubare Substanzen Benzol, Toluol, Xylol, Methanol und/oder Ethanol zudosiert werden.

4. Verfahren nach Anspruch 2 oder Anspruch 3, dadurch gekennzeichnet, dass leicht abbaubarer Essigsäuremethylester zudosiert wird.

**Claims**

1. A process for the continuous separation of gaseous, volatile and/or liquid impurities from waste gases of chemical industry processing plants with the use of an absorbent around which a receptacle is disposed and which is operative as substrate for microorganisms performing aerobic metabolic processes, the waste gases rising through the absorbent in a forced flow, the absorbent, which is supplied by mechanical feed means to the top of the receptacle and removed by mechanical delivery means from the bottom of the receptable, being returned by a conveyor, possibly after an admixture of fresh absorbent, to the top of the receptable, characterised by the following features:

a) Waste gases contaminated with halogenised impurities in the form of aliphatic, cycloaliphatic and/or aromatic hydrocarbons have atmospheric air added to them until the impurities in the waste gas amount to more than 25 wt. %;

b) To enhance fungoid growth the bio-mass used as absorbent and which has a heavy concentration of *actinomycetes globisporus,* has added to it the species penicillium in an amount per m$^2$ of absorbent of from 5-15, preferably 9-11 l, of penicillium concentrate of a concentration of 10$^6$-10$^7$ spores/ml, and

c) The O$_2$ content of the waste gases fed to the absorbent is maintained at at least 10 volume %.

2. A process according to claim 1, characterised in that readily decomposable gaseous, volatile and/or liquid substances are so dosed into the waste gas before entry into the absorbent that the cleaned waste gas issuing therefrom contains less than 150 mg of organic C per m$^3$ of waste gas.

3. A process according to claim 2, characterised in that as readily decomposable substances benzene, toluene, xylene, methanol and/or ethanol are added.

4. A process according to claim 2 or 3, characterised in that readily decomposable acetic acid methyl ester is added.

**Revendications**

1. Procédé pour séparer en continu des impuretés gazeuses, volatiles et/ou liquides de gaz résiduaires provenant d'installations de traitement de l'industrie chimique, avec utilisation d'une matière absorbante enfermée dans un récipient, et servant de substrat pour des microorganismes effectuant un processus de métabolisme aérobie, à travers laquelle les gaz résiduaires sont conduits de façon forcée du bas vers le haut, la matière absorbante, étant introduite par le haut du récipient et retirée par son fond au moyen d'un dispositif mécanique d'introduction et de décharge, étant, par l'intermédiaire d'un dispositif de transport, ré-introduite par le haut dans le récipient, éventuellement après incorporation de matière absorbante fraîche, caractérisé par les particularités suivantes:

a) les gaz résiduaires chargés en impuretés halogénées et se présentant sous la forme d'hydrocarbures aliphatiques, cycloaliphatiques et/ou aromatiques sont introduits de façon dosée dans l'air atmosphérique jusqu'à ce que les impuretés contenues dans le gaz résiduaire s'élèvent à une valeur supérieure à 25 pour cent en poids,

b) à la biomasse utilisée comme matière absorbante, fortement garnie d'Actinomycetes globisporus, on ajoute, en vue d'un garnissage supplémentaire en champignons de l'espèce Penicillium, par $m^2$ de matière absorbante, de 5 à 15, de préférence, de 9 à 11 litres d'un concentré de Penicillium d'une concentration de $10^6$ à $10^7$ spores par millilitre, et

c) la teneur en $O_2$ du gaz résiduaire amené à la matière absorbante est maintenue à une valeur d'au moins 10 pour cent en volume.

2. Procédé selon la revendication 1, caractérisé par le fait qu'avant l'introduction dans la matière absorbante, des substances gazeuses, volatiles et/ou liquides, facilement dégradables sont ajoutées de façon dosée au gaz résiduaire, de telle sorte que le gaz résiduaire purifié sortant de la matière absorbante renferme moins de 150 milligrammes de C organique par $m^3$ de gaz résiduaire.

3. Procédé selon la revendication 2, caractérisé par le fait que sont introduites de façon dosée, comme substances facilement dégradables, du benzène, du toluène, du xylène, du méthanol et/ou de l'éthanol.

4. Procédé selon la revendication 2 ou la revendication 3, caractérisé par le fait qu'est introduit de façon dosée l'ester méthylique de l'acide acétique facilement dégradable.

Fig.